# EUROPEAN PATENT APPLICATION

(11) **EP 4 491 940 A1**
(43) Date of publication of application: **15.01.2025**
(21) Application number: 23766699.5
(22) Date of filing: 02.03.2023
(51) Int. Cl.: F21S 43/237, F21S 43/241, F21S 43/247, F21V 8/00, F21W 103/00, F21W 103/10, F21W 103/15, F21W 103/20, F21W 103/45, F21W 103/55, F21Y 115/10, F21Y 115/30

(54) **VEHICLE LAMP**

(30) Priority: 10.03.2022 JP 2022037160
(71) Applicant: Stanley Electric Co. Ltd., Tokyo 153-8636 (JP)
(72) Inventor: SATO Koji, Tokyo 153-8636 (JP)
(74) Representative: Pritzlaff, Stefanie Lydia
(86) International application number: PCT/JP2023/007786
(87) International publication number: WO 2023/171523

(57) **Abstract**

Provided is a vehicle lamp (1A) that includes a light source (2) and a light guide body (3A), and that is configured to cause light (L) emitted from the light source (2) to enter the light guide body (3A) from an incident part (4), cause light (L) reflected by a plurality of reflection cuts (5a) provided on a back surface side of the light guide body (3A) to emit from the front surface side to the outside, and thus, cause a light emitting part (6) provided on the front surface side to emit light, the vehicle lamp (1A) further including a curved part (7) in which a part of the light guide body (3A) is curved between the incident part (4) and the light emitting part (6), and an upright wall (9) standing up from a front surface side of the curved part (7) by cutting out a part of the front surface side of the curved part (7) in the axial direction, and the upright wall (9) forms a reflective surface that reflects the light (L) guided in the curved part (7).

## Description

### [Technical Field]

The present invention relates to a vehicle lamp.

Priority is claimed on Japanese Patent Application No. 2022-037160, filed March 10, 2022, the content of which is incorporated herein by reference.

### [Background Art]

In the related art, for a vehicle lamp mounted on a vehicle, a configuration in which a light source such as a light emitting diode (LED) or the like and a rod-shaped light guide body (light guide rod) are assembled is known (for example, see the following Patent Document 1).

In such a vehicle lamp, light emitted from a light source enters a light guide body from an incident part provided on a base end side of the light guide body, and the light is guided toward a tip side of the light guide body while reflection of the light is repeated in the light guide body. In addition, the light reflected by a plurality of reflection cuts provided on a back surface side of the light guide body is emitted to the outside of the light guide body from a front surface side of the light guide body. Accordingly, it is possible to emit light linearly from the light emitting part provided on the front surface side of the light guide body.

### [Citation List]

### [Patent Document]

[Patent Document 1]
Japanese Patent No. 5938228

### [Summary of Invention]

### [Technical Problem]

Incidentally, in vehicle lamps in recent years, due to the diversification of designs, for example, there has been an increasing number of designs that use line-shaped emission for direction indicators (blinker lamps, turn lamps), width indicators (position lamps), and daytime running lamps (DRL), or the like.

However, in the above-mentioned rod-shaped light guide body, luminance unevenness may occur in the light emitting part due to differences in the optical path length of the light guided from the base end side to the tip side. That is, when luminance unevenness occurs in the light emitting part of the light guide body, the tip side, where the optical path length from the light source is longer, gets relatively darker than the base end side, where the optical path length from the light source is shorter, due to light attenuation, in the axial direction of the light guide body. Accordingly, the bright and dark with such luminance may be recognized as luminance unevenness of the light emitting part.

For this reason, when the rod-shaped light guide body is made to emit light linearly, due to occurrence of the above-mentioned luminance unevenness, the lighting feeling, such as with a deterioration in visibility or appearance of the light emitting part, may be degraded.

In particular, when the curved part in which a part of the light guide body is curved is provided between the incident part and the light emitting part, if the length of the curved part is short and the curvature is small, a part of the light guided inside the curved part does not go toward the tip of the light guide body, and may leak out from the base end side of the light emitting part as stray light. In this case, so-called point light, in which a part of the light emitting part on the base end side appears to shine more intensely than the surrounding area, deteriorates the appearance when the vehicle lamp is turned on.

An aspect of the present invention is directed to providing a vehicle lamp capable of improving appearance upon emission by preventing occurrence of luminance unevenness.

### [Solution to Problem]

An aspect of the present invention provides the following configurations.
(1) A vehicle lamp that includes a light source and a rod-shaped light guide body, and that is configured to cause light emitted from the light source to enter the light guide body from an incident part provided on a base end side of the light guide body, guide the light toward a tip side of the light guide body, and emit the light reflected by a plurality of reflection cuts provided on a back surface side of the light guide body from a front surface side of the light guide body to the outside of the light guide body, thereby causing a light emitting part provided on the front surface side of the light guide body to emit light, the vehicle lamp further including:
   a curved part in which a part of the light guide body is curved between the incident part and the light emitting part; and
   an upright wall standing up from a front surface side of the curved part by cutting out a part of the curved part on the front surface side in an axial direction,
   wherein the upright wall forms a reflective surface that reflects light guided in the curved part.
(2) The vehicle lamp according to the above-mentioned (1), wherein two of the upright walls facing each other are provided in a central portion of the curved part on a front surface side.
(3) The vehicle lamp according to the above-mentioned (2), wherein the upright walls are provided on both side surfaces of a convex portion which is formed by cutting out both sides of the central portion of the curved part on the front surface side in the axial direction.
(4) The vehicle lamp according to the above-mentioned (2), wherein the upright walls are provided on both side surfaces of a concave portion which is formed by cutting out the central portion of the curved part on the front surface side in the axial direction.
(5) The vehicle lamp according to any one of the above-mentioned (1) to (4), wherein a plurality of diffusion/reflection cuts are provided on a front surface side of the curved part.
(6) The vehicle lamp according to the above-mentioned (5), wherein the plurality of diffusion/reflection cuts are constituted by a plurality of knurlings extending in the axial direction of the curved part and arranged in a direction perpendicular to the axial direction of the curved part.

### [Advantageous Effects of Invention]

According to the aspect of the present invention, it is possible to provide a vehicle lamp capable of improving appearance upon emission by preventing occurrence of luminance unevenness.

### [Brief Description of Drawings]

FIG. 1 is a front view showing a configuration of a vehicle lamp according to a first embodiment of the present invention.
FIG. 2 is a plan view showing the configuration of the vehicle lamp shown in FIG. 1.
FIG. 3 is a cross-sectional view of a light guide body along a line segment III-III shown in FIG. 1.
FIG. 4 is an enlarged cross-sectional view of the light guide body showing a boxed portion IV shown in FIG. 3.
FIG. 5 is a cross-sectional view of the light guide body along a line segment V-V shown in FIG. 2.
FIG. 6 is a cross-sectional view of the light guide body along a line segment VI-VI shown in FIG. 2.
FIG. 7 is a cross-sectional view of the light guide body along a line segment VII-VII shown in FIG. 2.
FIG. 8 is a photograph showing a light source image of a light emitting part when the light guide body emits light, which is an example.
FIG. 9 is a photograph showing a light source image of a light emitting part when a light guide body emits light, which is a comparative example.
FIG. 10 is a cross-sectional view of a light guide body included in a vehicle lamp according to a second embodiment of the present invention.

### [Description of Embodiments]

Hereinafter, embodiments of the present invention will be described with reference to the accompanying drawings in detail.

Further, in the drawings used in the following description, in order to make each component easier to see, dimensions may be shown at different scales depending on the component, and dimensional ratios of each component may not be the same as the actual ones.

### (First embodiment)

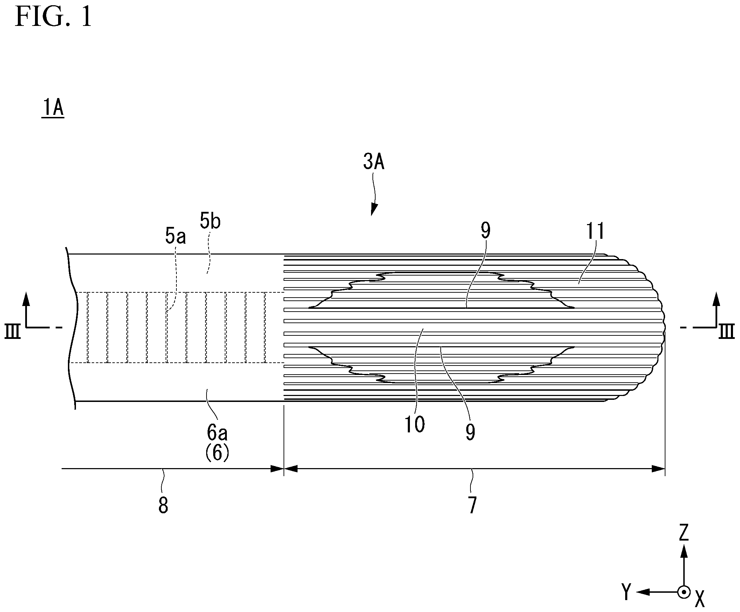

First, as a first embodiment of the present invention, for example, a vehicle lamp 1A shown in FIG. 1 to FIG. 7 will be described.

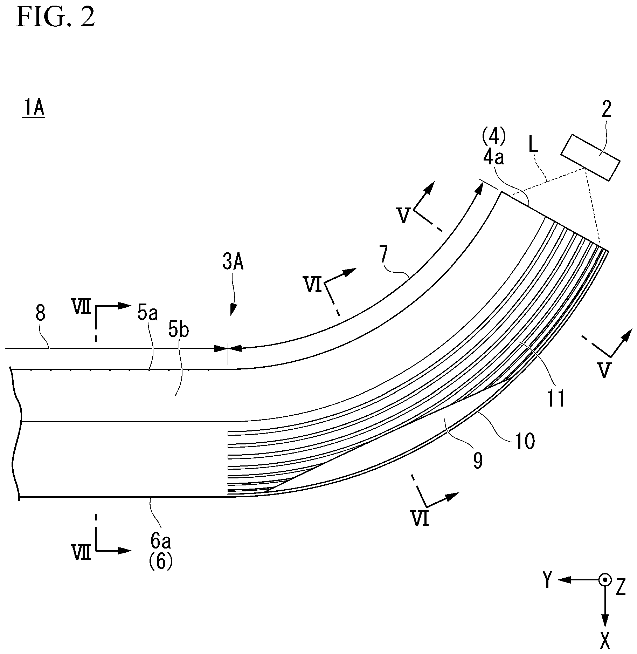

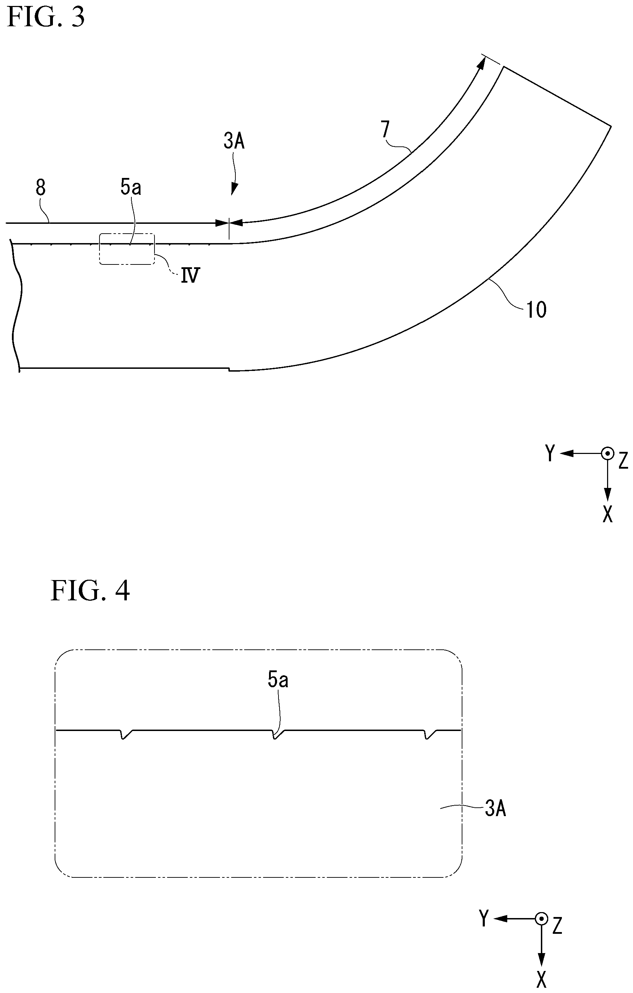

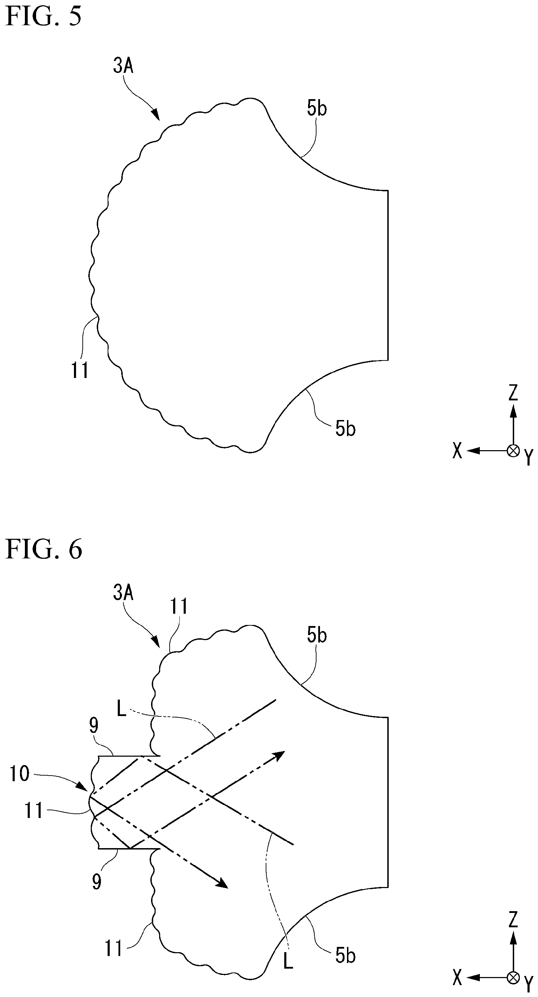

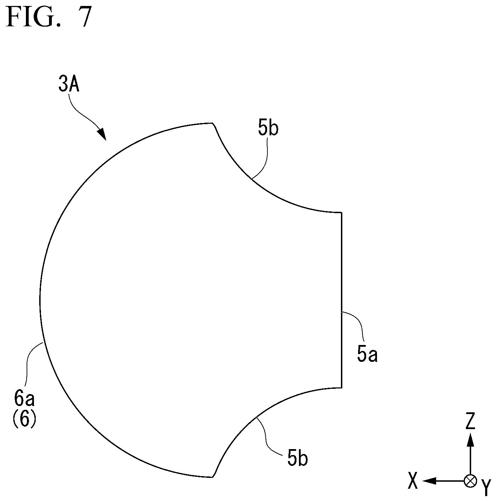

Further, FIG. 1 is a front view showing a configuration of the vehicle lamp 1A. FIG. 2 is a plan view showing the configuration of the vehicle lamp 1B. FIG. 3 is a cross-sectional view of a light guide body 3A along a line segment III-III shown in FIG. 1. FIG. 4 is an enlarged cross-sectional view of the light guide body 3A showing a boxed portion IV shown in FIG. 3. FIG. 5 is a cross-sectional view of the light guide body 3A along a line segment V-V shown in FIG. 2. FIG. 6 is a cross-sectional view of the light guide body 3A along a line segment VI-VI shown in FIG. 2. FIG. 7 is a cross-sectional view of the light guide body 3A along a line segment VII-VII shown in FIG. 2.

In addition, in the drawing described below, an XYZ orthogonal coordinate system is set, an X-axis direction indicates a forward/rearward direction of the vehicle lamp 1A, a Y-axis direction indicates a leftward/rightward direction of the vehicle lamp 1A, and a Z-axis direction indicates an upward/downward direction of the vehicle lamp 1A.

As shown in FIG. 1 and FIG. 2, the vehicle lamp 1 of the embodiment includes a light source 2, and the light guide body 3A having a rod shape, light L emitted from the light source 2 enters the light guide body 3A from an incident part 4 provided on a base end side of the light guide body 3A, the light L is guided toward a tip side of the light guide body 3A, and the light L reflected by a plurality of reflection cuts 5a provided on a back surface side of the light guide body 3A is emitted to the outside of the light guide body 3A from a front surface side of the light guide body 3A, thereby causing a light emitting part 6 provided on the front surface side of the light guide body 3A to emit light.

The light source 2 is constituted by for example, LEDs, is mounted on a surface of a circuit board (not shown) on which a driving circuit configured to drive the LED is provided, and radially emits the light L toward the base end side of the light guide body 3.

The light guide body 3A is formed of a light transmitting member, for example, a transparent resin such as polycarbonate, acryl, or the like, glass, or the like.

The incident part 4 has a flat (planar) incidence surface 4a located on the base end side of the light guide body 3A and facing the light source 2. The incident part 4 causes the light L emitted from the light source 2 to enter the light guide body 3A from the incidence surface 4a. Further, the incident part 4 is not limited to the configuration having the above-mentioned flat (planar) incidence surface 4a, and may have a configuration having a lens shape that causes the light L enter the light guide body 3A while parallelizing and condensing the light L radially emitted from the light source 2.

As shown in FIG. 3 and FIG. 4, the plurality of reflection cuts 5a may have any structure as long as the light L entering the back surface side of the light guide body 3A is reflected from the front surface side of the light guide body 3A at an angle where the light is emitted (transmitted) to the outside, and there are no particular limitations on the shape, size, number, or the like.

In the embodiment, for example, the reflection cuts 5a having a substantially triangular cross section formed by cutting out a central portion on the back surface side of the light guide body 3A in a vertical direction (the upward/downward direction in the embodiment) perpendicular to the axial direction of the light guide body 3A are arranged in the axial direction of the light guide body 3A (the leftward/rightward direction in the embodiment).

In addition, since the plurality of reflection cuts 5a cause the light emitting part 6 to more uniformly emit light in the axial direction of the light guide body 3A, which will be described below, adjacent intervals gradually become narrower from the base end side to the tip side of the light guide body 3A.

A pair of reflective surfaces 5b are provided on both sides with the central portion (the plurality of reflection cuts 5a) of the back surface side of the light guide body 3A sandwiched therebetween. The pair of reflective surfaces 5b are constituted by concave curved surfaces, which are curved in an arc shape, in a cross section in the vertical direction (hereinafter, referred to as "a vertical cross section") perpendicular to the axial direction of the light guide body 3A.

As shown in FIG. 1, FIG. 2 and FIG. 7, the light emitting part 6 has an emission surface 6a located on the front surface side of the light guide body 3A and continuous with the light guide body 3A in the axial direction. The emission surface 6a is constituted by a convex curved surface, which is curved in an arc shape, in the vertical cross section of the light guide body 3A.

Further, the emission surface 6a may be provided with a plurality of diffusion cuts (not shown) configured to diffuse the light L emitted from the emission surface 6a toward the outside. The diffusion cut may include, for example, a concavo-convex structure or the like formed by performing lens cutting referred to as flute cutting or fish eye cutting, knurling, embossing, or the like. In addition, it is possible to control a diffusion degree of the light L emitted from the emission surface 6a by adjusting a shape or the like of the diffusion cut.

Incidentally, as shown in FIG. 1 and FIG. 2, the vehicle lamp 1 of the embodiment has a curved part 7 in which a part of the light guide body 3A is curved between the incident part 4 and the light emitting part 6, and an extension portion 8 in which the plurality of reflection cuts 5a and the light emitting part 6 are provided. That is, the light guide body 3A extends forward from a position facing the light source 2, is curved by the curved part 7, and then, has an elongated shape in which the extension portion 8 extends in a widthwise direction of the vehicle.

Further, an angle range in which the curved part 7 is curved is preferably equal to or greater than 60°, and a curvature of the curved part 7 is preferably equal to or greater than R18.5 on the central axis.

In addition, as shown in FIG. 1, FIG. 2 and FIG. 6, the light guide body 3A has a pair of (two) upright walls 9 standing up from the front surface side of the curved part 7 by cutting out both sides with the central portion on the front surface side of the curved part 7 sandwiched therebetween in the axial direction.

The pair of upright walls 9 are provided on both side surfaces of a convex portion 10 formed by cutting out both sides with the central portion of the front surface side of the curved part 7 sandwiched therebetween in the axial direction. That is, the pair of upright walls 9 are formed rising parallel to each other from the front surface side of the curved part 7 while facing each other on both side surfaces of the convex portion 10.

Further, the pair of upright walls 9 are not limited to those that stand up parallel to each other on both side surfaces of the convex portion 10 described above, and may be formed to be inclined with respect to each other. In addition, the pair of upright walls 9 are not limited to a flat surface, but may be a curved surface that is curved into a convex shape or a concave shape.

In addition, as shown in FIG. 1, FIG. 2, FIG. 5 and FIG. 6, in order to cause the light emitting part 6 to emit the light L more uniformly, a plurality of diffusion/reflection cuts 11 configured to diffuse and reflect the light L guided into the curved part 7 in the vertical direction of the light guide body 3A are provided on the front surface side of the curved part 7 in the vertical direction of the light guide body 3A.

The plurality of diffusion/reflection cuts 11 are constituted by a plurality of knurlings extending in the axial direction of the curved part 7 and arranged in a direction perpendicular to the axial direction of the curved part 7. That is, each of the diffusion/reflection cuts 11 is constituted by a convex curved surface that is curved in an arc shape in the vertical cross section of the light guide body 3A. Further, the diffusion/reflection cuts 11 are not limited to the configuration in which the knurlings curved in the above-mentioned convex shape are arranged as described above and may have a configuration in which knurlings curved in a concave shape are arranged or may have a configuration in which these convex and concave knurlings are alternately arranged.

In the vehicle lamp 1A of the embodiment having the above-mentioned configuration, as shown in FIG. 6, the pair of upright walls 9 form a reflective surface configured to reflect the light L guided in the curved part 7. Accordingly, even when the length of the curved part 7 is short and the curvature is small, some of the light L guided in the curved part 7 does not go toward the tip side of the light guide body 3A, and it is possible to guide the light toward the tip side of the light guide body 3A while suppressing leakage of stray light from the base end side of the light emitting part 6 to the outside.

Accordingly, in the vehicle lamp 1A of the embodiment, it is possible to prevent luminance unevenness from occurring in the light emitting part 6 due to the so-called point light in which a part of the base end side of the light emitting part 6 appears to shine more intensely than the surrounding area.

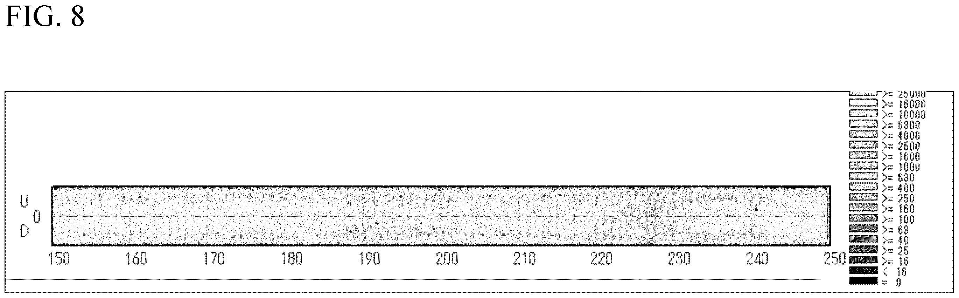

Here, as an example, a light source image of the light emitting part 6 when the light guide body 3A emits light was obtained by simulation. The light source image of the light emitting part according to the simulation result is shown in FIG. 8.

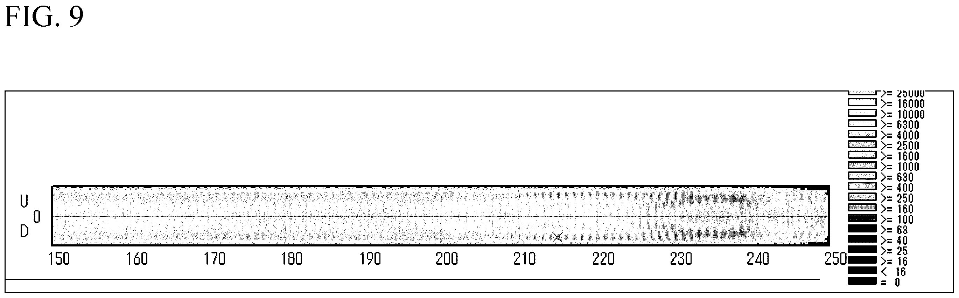

Meanwhile, as a comparative example, the light source image of the light emitting part 6 when the light guide body having basically the same shape as the light guide body 3A except that the pair of upright walls 9 located on the front surface side of the curved part 7 are omitted (the curved part 7 has a uniform cross-sectional shape shown in FIG. 5) emits light was obtained by simulation. The light source image of the light emitting part according to the simulation is shown in FIG. 9.

In the light guide body 3A that is the example, as shown in FIG. 8, it can be seen that there is no point light and the light emitting part 6 emits light uniformly. Meanwhile, in the light guide body that is the comparative example, as shown in FIG. 9, it can be seen that the point light is generated on the base end side of the light emitting part 6.

As described above, in the vehicle lamp 1A of the embodiment, it is possible to cause the light emitting part 6 to cause emit light uniformly, and improve appearance upon emission of the light emitting part 6.

### (Second embodiment)

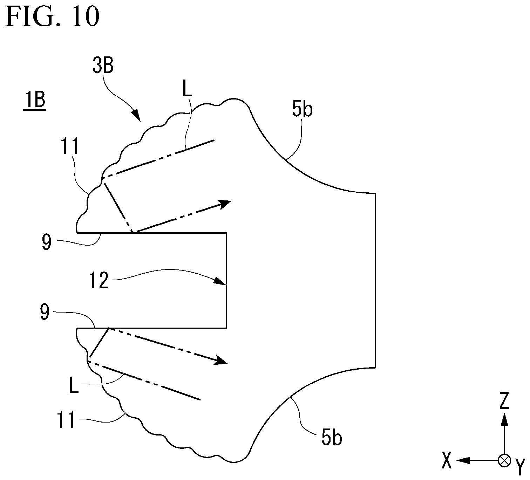

Next, as a second embodiment of the present invention, for example, a vehicle lamp 1B shown in FIG. 10 will be described.

Further, FIG. 10 is a cross-sectional view of a light guide body 3B provided in the vehicle lamp 1B. In addition, in the following description, the same parts as in the vehicle lamp 1A are designated by the same reference signs and description thereof will be omitted.

The vehicle lamp 1B of the embodiment includes the light guide body 3B as shown in FIG. 10, instead of the light guide body 3A. Other than that, the vehicle lamp 1B has basically the same configuration as the vehicle lamp 1A described above.

Specifically, in the light guide body 3B, as shown in FIG. 10, a pair of (two) upright walls 9 are provided on both side surfaces of a concave portion 12 formed by cutting out a central portion of the curved part 7 on the front surface side in the axial direction. That is, the pair of upright walls 9 are formed on both side surfaces of the concave portion 12, facing each other and rising in parallel from the front surface side of the curved part 7.

In the vehicle lamp 1B of the embodiment having the above-mentioned configuration, the pair of upright walls 9 form a reflective surface configured to reflect the light L guided in the curved part 7. Accordingly, even when the length of the curved part 7 is short and the curvature is small, some of the light L guided in the curved part 7 does not go toward the tip side of the light guide body 3A, and it is possible to guide the light toward the tip side of the light guide body 3A while suppressing leakage of stray light from the base end side of the light emitting part 6 to the outside.

Accordingly, in the vehicle lamp 1B of the embodiment, it is possible to prevent luminance unevenness from occurring in the light emitting part 6 due to the so-called point light in which a part of the base end side of the light emitting part 6 appears to shine more intensely than the surrounding area.

As described above, in the vehicle lamp 1B of the embodiment, it is possible to cause the light emitting part 6 to emit light more uniformly and improve appearance upon emission of the light emitting part 6.

Further, the present invention is not necessarily limited to the embodiment, and various changes may be added without departing from the scope of the present invention.

For example, while the pair of (two) upright walls 9 are provided on both side surfaces of the convex portion 10 formed by cutting out both side with the central portion of the curved part 7 on the front surface side sandwiched therebetween in the axial direction, or both side surfaces of the concave portion 12 formed by cutting out the central portion of the curved part 7 on the front surface side in the axial direction, it is possible to obtain the effect of the reflective surface provided by the above-mentioned upright walls 9 by providing at least one or more of the upright walls 9. In addition, by providing the plurality of convex portions 10 or concave portions 12, the number of the upright walls 9 can also be increased.

Further, a reflector facing a back surface of the light guide body 3A or 3B may be disposed in the vehicle lamp 1A or 1B. In the case of this configuration, by reflecting the light L emitted from the back surface side of the light guide body 3A or 3B to the outside using the reflector and causing the light to re-enter the inside from the back surface side of the light guide body 3A or 3B, utilization efficiency of the light L can be increased.

In addition, in the vehicle lamp 1, the shape of the light guide body 3A or 3B can be changed as appropriate according to the actual vehicle design or the like. For example, the light guide body 3A or 3B may have a shape that is curved or inclined toward the direction in which the outer side in the vehicle width direction recedes more than the inner side in accordance with a slant shape given to a corner portion on the front end side or the rear end side of the vehicle.

Further, the vehicle lamp to which the present invention is applied is not particularly limited, and the present invention can be widely applied to, for example, taillights (tail lamps), width indicators (position lamps), daytime running lamps (DRL), back lamps, direction indicators (blinker lamps), side marker lamps, or the like.

In addition, the light source 2 may be anything that emits the light L radially, and in addition to the above-mentioned LED, for example, a light emitting element such as a laser diode (LD) or the like can be used. In addition, the color of the light emitted from the light source 2 can be changed as appropriate to red light, white light, orange light, or the like, depending on the purpose of the vehicle lamp.

### [Reference Signs List]

1A, 1B Vehicle lamp
2 Light source
3A, 3B Light guide body
4 Incident part
5a Reflection cut
6 Light emitting part
7 Curved part
8 Extension portion
9 Upright wall
10 Convex portion
11 Diffusion/reflection cut
12 Concave portion
L Light

## Claims

1. A vehicle lamp that includes a light source and a rod-shaped light guide body, and that is configured to cause light emitted from the light source to enter the light guide body from an incident part provided on a base end side of the light guide body, guide the light toward a tip side of the light guide body, and emit the light reflected by a plurality of reflection cuts provided on a back surface side of the light guide body from a front surface side of the light guide body to the outside of the light guide body, thereby causing a light emitting part provided on the front surface side of the light guide body to emit light, the vehicle lamp further including:
a curved part in which a part of the light guide body is curved between the incident part and the light emitting part; and
an upright wall standing up from a front surface side of the curved part by cutting out a part of the curved part on the front surface side in an axial direction,
wherein the upright wall forms a reflective surface that reflects light guided in the curved part.

2. The vehicle lamp according to claim 1, wherein two of the upright walls facing each other are provided in a central portion of the curved part on a front surface side.

3. The vehicle lamp according to claim 2, wherein the upright walls are provided on both side surfaces of a convex portion which is formed by cutting out both sides of the central portion of the curved part on the front surface side in the axial direction.

4. The vehicle lamp according to claim 2, wherein the upright walls are provided on both side surfaces of a concave portion which is formed by cutting out the central portion of the curved part on the front surface side in the axial direction.

5. The vehicle lamp according to any one of claims 1 to 4, wherein a plurality of diffusion/reflection cuts are provided on a front surface side of the curved part.

6. The vehicle lamp according to claim 5, wherein the plurality of diffusion/reflection cuts are constituted by a plurality of knurlings extending in the axial direction of the curved part and arranged in a direction perpendicular to the axial direction of the curved part.
